Europäisches Patentamt

European Patent Office

Office européen des brevets

(19)

(11) Veröffentlichungsnummer: **0 249 798 B1**

# EUROPÄISCHE PATENTSCHRIFT

(45) Veröffentlichungstag der Patentschrift: **05.08.92**

(51) Int. Cl.⁵: **G01N 21/88**, B07C 5/342

(21) Anmeldenummer: **87107991.9**

(22) Anmeldetag: **03.06.87**

(54) **Verfahren zum Prüfen von Bauteilen aus transparentem Material auf Oberflächenfehler und Einschlüsse.**

(30) Priorität: **14.06.86 DE 3620146**

(43) Veröffentlichungstag der Anmeldung:
**23.12.87 Patentblatt 87/52**

(45) Bekanntmachung des Hinweises auf die
Patenterteilung:
**05.08.92 Patentblatt 92/32**

(84) Benannte Vertragsstaaten:
**AT BE CH DE ES FR GB GR IT LI LU NL SE**

(56) Entgegenhaltungen:
EP-A- 0 063 761
EP-A- 0 065 051
EP-A- 0 146 005
GB-A- 2 085 579

(73) Patentinhaber: **Battelle-Institut e.V.**
**Am Römerhof 35 Postfach 900 160**
**W-6000 Frankfurt/Main 90(DE)**

(72) Erfinder: **Schmalfuss, Harald, Dr.**
**Rosenring 11a**
**W-6054 Rodgau 3(DE)**
Erfinder: **Kurpiella, Hubert**
**Bremer Strasse 6**
**W-6236 Eschborn(DE)**
Erfinder: **Schneider, Bernhard**
**Weilbächer Wälder 12AM**
**W-6238 Hofheim(DE)**

Rank Xerox (UK) Business Services

## Beschreibung

Die vorliegende Erfindung betrifft ein Verfahren nach dem Oberbegriff des Anspruchs 1.

Bauteile aus transparentem Material, beispielsweise optische oder ophthalmische Linsen müssen vor ihrer Verwendung auf Fehler, insbesondere Oberflächenfehler wie Kratzer, Wischer, Risse, Aussprünge, Flecken und auf Einschlüsse wie Blasen oder Schlieren geprüft werden. Solche Fehler würden die Verwendbarkeit einer Linse einschränken, wenn sie die in DIN 3140 angeführten Grenzwerte übersteigen.

Üblicherweise erfolgt die Prüfung optischer Bauteile als Sichtprüfung durch den Menschen. Eine solche Prüfung muß in einem weitgehend abgedunkelten Raum durchgeführt werden. Sie ist teuer, nicht genügend objektiv und wegen der hohen Monotomie der Prüfvorgänge nicht genügend zuverlässig.

Man hat sich deshalb bemüht Verfahren und Vorrichtungen zur automatischen, objektiven Prüfung optischer Bauteile zu entwickeln.

Aus der DE-OS 32 37 511 ist es bekannt, zu prüfende optische Bauteile in den optischen Strahlengang einer Fernsehkamera zu bringen und durch das Bauteil hindurch ein Testmuster auf die Kamera abzubilden. Die durch Fehler im Bauteil hervorgerufenen Störungen führen zu einem Videosignal, das von dem durch das Bauteil nicht beeinflußten Soll-Signal abweicht. Aus der Abweichung von Soll- und Ist-Signal wird auf die Fehler geschlossen.

Eine nach diesem verfahren arbeitende Vorrichtung ist recht aufwendig und vermag kleinere Störungen, beispielsweise durch Kratzer, Wischer oder Haarrisse nicht zu erkennen.

Um die Empfindlichkeit des Prüfvorganges zu steigern, wird in der DE-OS 30 11 014 vorgeschlagen, das zu prüfende Bauteil als Ganzes zu beleuchten, ein Fernsehbild zu erzeugen und das Videosignal Zeile für Zeile zu analysieren. Auch dieses Verfahren ist nicht hinreichend genau.

Ein noch älterer Vorschlag für ein Prüfvefahren findet sich in der DE-OS 23 37 597. Dort wird ein Lichtstrahl auf die Oberfläche des zu prüfenden Bauteils fokussiert und wird punktförmig unter Erhaltung seines Fokussierungszustandes über die Oberfläche bewegt. Das durch das Bauteil tretende Licht wird zurück reflektiert, tritt nochmals durch das Bauteil und fällt dann auf einen Detektor. Abweichungen in der Intensität des Empfängersignales erlauben es, auf einen Fehler zu schließen und diesen auch zu lokalisieren.

Eine nach diesem Verfahren arbeitende Vorrichtung ist sehr aufwendig. Sie erlaubt nur die Prüfung der Teile des Werkstückes, auf die der Abtaststrahl fokussiert ist.

Die GB-A-20 85 579 beschreibt ein Verfahren mit den Merkmalen des Oberbegriffs von Patentanspruch 1.

Zum Stand der Technik wird auch hingewiesen auf die EP-A-0 146 005 und die EP-A-0 065 051, die sich mit Schaltungsanordnungen für die Prüfung von Oberflächen bzw. für das Abtasten von Oberflächen mit Hilfe eines Laserstrahls befassen.

Es ist Aufgabe der vorliegenden Erfindung, ein Verfahren zum Prüfen von Bauteilen aus transparentem Material auf Oberflächenfehler und Einschlüsse zu schaffen, das eine schnelle und sichere Bewertung und Klassifizierung eines Bauteils nach vorwählbaren Kriterien ermöglicht, wobei zur Bewertung beide Flächen des Bauteils beitragen.

Diese Aufgabe wird durch das Verfahren gelöst, das die im kennzeichnenden Teil des Anspruchs 1 angegebenen Verfahrensschritte umfaßt.

Bei dem Verfahren nach der Erfindung wird ein Lichtschnitt durch das zu prüfende Bauteil erzeugt und vollständig durch dieses hindurch bewegt.

Der durch das zu prüfende Bauteil hindurch bewegte Lichtschnitt ermöglicht es, Signale zu erzeugen, die auf isotrop streuende Fehler des Bauteils zurückzuführen sind und die nach Vorder- und Rückfläche erfaßt sind. Auch anisotrop streuende Fehler können erfaßt werden, wobei jedoch im allgemeinen eine Unterscheidung zwischen Vorder- und Rückfläche des Bauteils nicht möglich ist.

Die von Fehlern des Bauteils ausgelösten Signale werden bei dem Verfahren nach der Erfindung nach ihrer Digitalisierung sowohl in Echt-Zeit als bei Bedarf auch über einen Bildspeicher ausgewertet. Die Auswertekriterien sind aus DIN 3140 abgeleitet. Sie bewerten Zahl und Ort der Fehlersignale und sie können beim Verfahren nach der Erfindung auch die Grauwertverteilung bewerten, da die gemessene Streulichtintensität der Tiefe des zugeordneten Fehlers proportional ist. Zweckmäßig werden dabei punkt- und linienartige Fehler des Bauteils getrennt bewertet. Auch ergibt sich eine Vorbehandlung der anisotrop streuenden Fehlern zugeordnetetn Signale.

Die nach den Auswertekriterien, die als Software in einem Auswerterechner niedergelegt sind, bewerteten Signale werden vorteilhaft dazu benutzt, das ausgewertete Bauteil zu klassifizieren, wie dies in den Ansprüchen 7 und 8 angegeben ist.

Anspruch 2 beschreibt die zweckmäßige Ausgestaltung der Auswerte-Einheiten, während sich Anspruch 3 auf die Ausbildung des Auswertekriteriums bezieht.

Anspruch 4 beschreibt eine vorteilhafte Vorbehandlung der Vorder-und Rückseite des Bauteils zugeordneten Signale.

Nach Anspruch 5 ist es zweckmäßig, die zur Auswertung anstehende Fläche des Bauteils zugleich auf einem Monitor sichtbar zu machen.

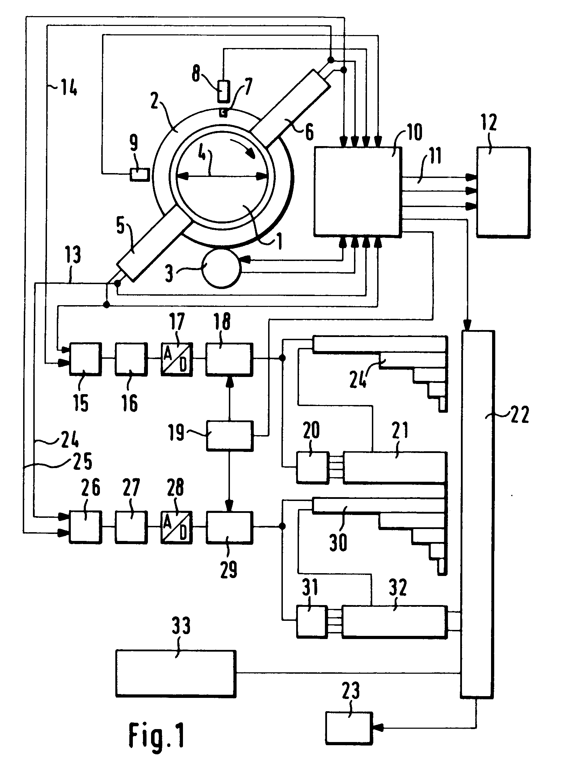

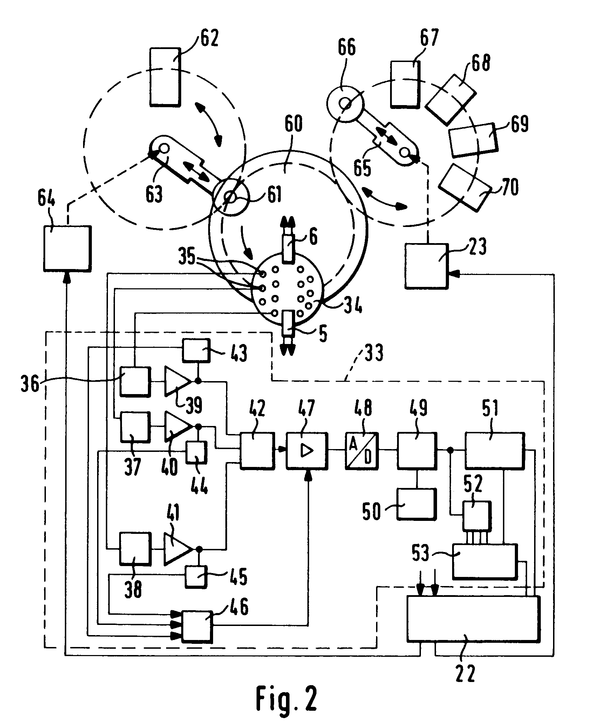

Die Erfindung wird im folgenden anhand der Figuren 1 und 2 der beigefügten Zeichnungen in ihrem Verfahrensablauf näher beschrieben. Im einzelnen zeigen:

Fig. 1　　ein Ausführungsbeispiel einer Einrichtung zur Durchführung des Verfahrens nach der Erfindung;

Fig. 2　　ein anderes Ausführungsbeispiel einer solchen Einrichtung.

In Fig. 1 ist als zu prüfendes Bauteil eine Linse (1) dargestellt, welche auf einem Drehteller (2) angeordnet ist, welcher mittels eines Schrittmotors (3) in Pfeilrichtung gedreht wird. Während dieser Drehung wird ein Lichtbündel (4) linear entlang eines Durchmessers bewegt, so daß ein Lichtschnitt durch die Linse (1) entsteht. Zur Ablenkung des Lichtbündels (4) dient vorteilhaft ein, hier nicht dargestellter Spiegelscanner.

Mit (5) und (6) sind zwei Einrichtungen bezeichnet von denen jede Ausgangssignale erzeugt, welche isotrop streuenden Fehlern der Vorder- und der Rückfläche der Linse (1) zugeordnet sind. Solche Einrichtungen sind in der Patentanmeldung EP-A-0 249 799 mit dem Titel "Vorrichtung zum Prüfen von Bauteilen aus transparentem Material auf Oberflächenfehler und Einschlüsse" näher beschrieben.

Der Drehteller (2) ist mit einer Marke (7) versehen, welche mittels eines Detektors (8) abgetastet wird. Die vom Detektor (8) gelieferten Signale kennzeichnen jeweils den Beginn einer Abtastung. Zur Kennzeichnung des Beginns einer Abtastzeile ist ein Empfänger (9) vorgesehen. Die Signale der Empfänger (8) und (9) und die von den Einrichtungen (5) und (6) erzeugten Fehlersignale werden einer Anordnung (10) zugeführt, welche zur Synchronisation zwischen dem Scanner und dem Schrittmotor (3) dient und die an ihrem Ausgang (11) sowohl das Videosignal als auch ein dem Bildpunkt-Takt und ein dem Zeilen-Takt proportionales Signal liefert. Diese Signale werden einer Anordnung (12) zugeführt, welche ein Bild einer ausgewählten Fläche der Linse (1) auf einem Monitor erzeugt.

Die der Vorderfläche der Linse (1) entsprechenden Fehlersignale der beiden Einrichtungen (5) und (6) werden über die Ausgangsleitungen (13) und (14) einer Additionsstufe (15) zugeführt. Von dort gelangt das Summensignal zu einer Stufe (16), welche als Hintergrundunterdrückungsstufe ausgebildet ist und die alle unterhalb eines bestimmten Grauwertes liegenden Signale unterdrückt. Das Ausgangssignal der Stufe (16) wird einem Analog-Digital-Wandler (17) zugeführt. Dort wird das Analogsignal beispielseise in ein 4bit-Signal (16 Graustufen) umgewandelt.

Bei der Abtastung der Linse (1) mittels des durch diese Linse hindurch bewegten Lichtschnittes wird jeder Oberflächenpunkt der Linse (1) abhängig von seinem Abstand zum Mittelpunkt zum Teil mehrfach abgetastet. Der Extremfall ist der Mittelpunkt selbst, der bei einer beispielsweisen Unterteilung der Umdrehung der Linse (1) in 4096 Schritte insgesamt 4096-fach erfaßt wird. Es ist deshalb notwendig die Signale hinter der Stufe (17) zu mitteln. Durch eine solche Mittelung wird das Signal/ Rausch-Verhältnis verbessert und die Störanfälligkeit verringert. Es ist prinzipiell möglich die mehrfach erfaßten Signalwerte aufzuaddieren und dann durch die Zahl der Mehrfachabtastungen zu dividieren. Es sind selbstverständlich auch alle anderen Mittelungen des Signals möglich. Die Mittelung wird uber ein Signal vom Taktgeber (19) gesteuert, der seinerseits von der Anordnung (10) synchronisiert wird.

Hinter der Stufe (18) wird das Signal aufgespalten. Es wird zur Echt-Zeitauswertung einer Anordnung (20) zugeführt, welche das Signal nach vier einstellbaren digitalen Schwellen aufteilt. Die aufgesplitteten Signale werden nachgeschalteten Zählern zugeführt, welche in einem Sektorregister (21) enthalten sind. Es hat sich als vorteilhaft erwiesen insgesamt 64 Sektorzähler vorzusehen. Diese teilen die Oberfläche der Linse (1) in 64 gleichmäßig über die Fläche verteilte Winkelsektoren auf.

Nach dem Ende einer Abtastung, d.h. im angeführten Beispiel nach 4096 Winkelschritten in der Umdrehung der Linse (1) liegen also für jeden Sektor der Linsenoberfläche vier Pixelsummen vor. Diese Pixelsummen sind abhängig von der Zahl, dem Ort und der Grauwertverteilung der Fehlersignale.

Die Sektorzähler (21) werden über einen Auswerterechner (22) ausgelesen, der das Ergebnis nach Auswertekriterien beurteilt, welche aus DIN 3140 abgeleitet sind. Das eigentliche Auswertesignal steht am Ausgang des Rechners (22) zur Verfügung und wird einer Anordnung (23) zugeleitet. Dieses Signal klassifiziert die ausgewertete Fläche der Linse (1), wobei beispielsweise zwei Klassifizierungsstufen nämlich

- Linse ohne Einschränkung gut, oder
- Linse ohne Einschränkung schlecht

denkbar sind. Ist eine Klassifizierung in diese Grob-Stufen nicht möglich, so wird über den Rechner (22) der Bildspeicher (24) ausgewertet. Dieser Bildspeicher (24) enthält die von der Stufe (18) gelieferten Signale und ermöglicht es so in Problemfällen die Linse (1) nach feineren Auswahlkriterien zu beurteilen ohne daß eine neue Abtastung der Linse erforderlich wird. Die Auswertung des Bildspeichers (24) wird dadurch erleichtert, daß der Sektorzähler (21) Adressignale zum Bildspeicher (24) liefert d.h. diejenigen Sektoren sind schon vorausgewählt in denen eine genauere Analyse vorgenommen werden muß.

Die Auswertung der Linse (1) erfolgt parallel für ihre Vorder- und ihre Rückseite.

Die den Fehlern auf der Rückseite der Linse (1) proportionalen Fehlersignale werden von den Einrichtungen (5) und (6) über die Ausgangsleitungen (24) und (25) einer Additionsstufe (26) zugeführt. Dieser ist wieder eine Hintergrundunterdrückungsstufe (27) und ein Analog-Digital-Wandler (28) nachgeschaltet. Mit (29) ist eine Mittelungsstufe bezeichnet, welche über den Taktgeber (19) synchronisiert wird. Die Ausgangssignale der Stufe (29) werden parallel einem Bildspeicher (30) und einer Schwellwert-Stufe (31) mit nachgeschalteten Sektorzählern (32) zugeführt. Die eigentliche Auswertung der Signale erfolgt genauso wie vorstehend im Zusammenhang mit der Vorderfläche der Linse (1) beschrieben.

Mit (33) ist eine Anordnung bezeichnet, welche weitere Fehlersignale der Linse (1) liefert, beispielsweise Signale, welche von anisotrop streuenden Linsenfehlern ausgelöst werden. Auch diese Signale werden im Rechner (22) nach den schon erwähnten Auswertekriterien bewertet und tragen zur Klassifizierung der in der Anordnung (23) bereitstehenden Signale bei.

Fig. 2 zeigt eine solche Anordnung zur Erzeugung von Fehlersignalen, die auf anisotrop streuende Linsenfehler zurückzuführen sind. Zur Erfassung dieser Signale ist über der auszuwertenden Linse eine Halbschale angeordnet, welche sowohl die beiden Einrichtungen (5) und (6) der Linse (1) als auch mehrere über die Oberfläche verteilte Empfänger enthält. Eine solche Vorrichtung ist in der Patentanmeldung EP-A-0 249 799 mit dem Titel "Vorrichtung zum Prüfen von Bauteilen aus transparentem Material auf Oberflächenfehler und Einschlüsse" näher beschrieben, die am gleichen Tag von der Anmelderin eingereicht wurde.

In der Darstellung der Fig. 2 sind aus Gründen der Übersichtlichkeit in der Halbschale (34) nur einige Aufnahmeöffnungen mit (35) bezeichnet, in denen die hier gesondert dargestellten Empfänger (36, 37, 38) angeordnet sind. Jedem dieser Empfänger ist ein Vorverstärker (39, 40, 41) zugeordnet, deren Ausgangssignale in einer Stufe (42) aufaddiert werden. Die Ausgangssignale der Vorverstärker gelangen gleichzeitig jeweils zu einem Trigger (43, 44, 45) und erzeugen dort ein Flag-Signal sobald die Ausgangsstufe des entsprechenden Vorverstärkers ein Signal liefert das einen voreingestellten Schwellwert überschreitet. Das Auftreten eines solchen Flag-Signals ist ein Zeichen dafür, daß der jeweilige Empfänger ein Fehlersignal erhalten hat. Die Flag-Signale werden in einer Stufe (46) aufaddiert und das Ausgangssignal dieser Stufe dient dazu den Verstärkungsfaktor des Hauptverstärkers (47) einzustellen. Damit wird das von der Stufe (42) kommende Signal verstärkt und zugleich normiert. Dieses Signal wird in der Stufe (48) in ein Digital-Signal umgewandelt, das in der Stufe (49) gemittelt wird, welche über den Taktgeber (50) gesteuert ist. Das gemittelte Ausgangssignal der Stufe (49) wird parallel einem Bildspeicher (51) und über eine Schwellwert-Stufe (52) einem Sektorregister (53) zugeführt. Die Auswertung der von den Stufen (51) und (53) gelieferten Fehlersignale erfolgt ebenso wie im Zusammenhang mit der Fig. 1 schon beschrieben ist.

Natürlich ist anstelle der hier beschriebenen gemischt analog/digitalen Signalauswertung auch eine komplett in Digitaltechnik ausgeführte Anordnung möglich.

In Fig. 2 ist mit (60) ein Drehteller bezeichnet, welcher taktgesteuert auszuwertende Bauteile (61) in Meßposition unter die Halbschale (34) bewegt. Die auszuwertenden Bauteile sind in einem Vorratsbehälter (62) angeordnet und werden mittels einer schematisch dargestellten Einrichtung (63) aus diesem Vorratsbehälter entnommen und auf den Drehteller (60) aufgelegt. Die Steuerung der Transporteinrichtung (63) erfolgt über eine Anordnung (64), welche vom Rechner (22) gesteuert wird.

Nach erfolgter vollständiger Abtastung des unter der Halbschale (34) sich befindlichen Bauteiles (61) erzeugt der Rechner (22) Klassifizierungssignale, welche einer Anordnung (23) zugeführt werden. Diese Klassifizierungsmerkmale sind kennzeichnend für Bewertungsstufen des ausgewerteten Bauteiles. Eine solche Bewertungsstufe ist beispielsweise die, daß das Bauteil ohne Einschränkung gut ist. In diesem Fall wird von der Anordnung (23) ein Signal erzeugt das die schematisch dargestellte Transporteinrichtung (65) in eine Position bringt in der sie die gerade ausgewertete Linse (66) ergreift und im Ablagespeicher (67) ablegt.

Ist das Ergebnis der Bewertung, daß die Linse (66) ohne Einschränkung schlecht ist, so wird sie mittels der Transportvorrichtung (65) im Ablagespeicher (70) abgelegt. Es sind verschiedene Bewertungs-Zwischenstufen möglich, welche dann den Ablagespeichern (68) und (69) zugeordnet sein können.

Die Vorrichtung nach Fig. 2 transportiert also Linsen aus einem Vorratsbehälter (62) automatisch in Meßposition, wertet die von dieser Linse erzeugten Fehlersignale aus, bewertet diese und legt die ausgewertete Linse entsprechend der ermittelten Bewertungsstufe in einem der Ablagespeicher (67-70) ab.

In Fig. 2 ist nur ein einziger Rechner (22) dargestellt. In Wirklichkeit wird die Prozeßsteuerung über einen gesonderten Rechner erfolgen, während für die eigentliche Auswertung der Meßsignale und die Errechnung der Bewertungsstufen ein Auswerterechner zuständig ist.

## Patentansprüche

1. Verfahren zum Prüfen von Bauteilen aus transparentem Material auf Oberflächenfehler und Einschlüsse, bei dem das Bauteil (1) mittels eines bewegten Lichtstrahles (4) punktförmig abgetastet und das von Fehlern des Bauteils beeinflußte Licht detektiert und zur Erzeugung von Signalen verwendet wird, wobei der bewegte Lichtstrahl (4) einen Lichtschnitt durch das Bauteil (1) erzeugt, der vollständig durch dieses hindurch bewegt wird, während dieser Bewegung Signale erzeugt werden, die der Vorder-und der Rückfläche des Bauteils (1) zugeordnet sind und diese den Flächen zugeordneten Signale digitalisiert werden, **dadurch gekennzeichnet,** daß die den Flächen zugeordneten Signale jeweils parallel sowohl einem Bildspeicher (24, 30) als auch über eine vorwählbare Anzahl (x) von Schwellen (20,31) einer Anzahl (y) von Sektorzählern (21,32) zugeführt wird, daß die Sektorzähler (21,32) on-line nach einem vorwählbaren Kiterium hinsichtlich Zahl, Ort und Grauwertverteilung der Fehlersignale ausgewertet werden, daß bei nicht hinreichend gesicherter Erfüllung dieses Kriteriums automatisch eine anschließende Auswertung der Signale des Bildspeichers (24,30) über einen Rechner (22) erfolgt, daß zusätzlich Empfänger (36-38) zur Detektion von anisotrop streuenden Fehlern des Bauteils (1) vorgesehen sind, wobei die von diesen Empfängern (36-38) erzeugten Signale über jeweils einen Vorverstärker (39-41) einem gemeinsamen Hauptverstärker (47) zugeführt werden und vom Signal jedes Vorverstärkers (39-41) ein Trigger-Signal abgeleitet wird, sobald das Vorverstärker-Signal einen vorbestimmten Schwellwert übersteigt, daß alle Trigger-Signale addiert werden (46) und das Summensignal zur Steuerung des Verstärkungsfaktors des Hauptverstärkers (47) verwendet wird, und daß das von diesem erzeugte Signal digitalisiert und ausgewertet wird.

2. Verfahren nach Anspruch 1, **dadurch gekennzeichnet,** daß die Sektorzähler (21,32) Adressen-Signale für zugeordnete Bereiche des Bildspeichers (24,30) erzeugen.

3. Verfahren nach Anspruch 1, **dadurch gekennzeichnet,** daß das Auswertekriterium die der Vorderfläche und die der Rückfläche des Bauteils (1) zugeordneten Signale bewertet.

4. Verfahren nach Anspruch 1,

**dadurch gekennzeichnet,** daß die Signale von Flächenelementen des Bauteils (1), die während der Bewegung des Lichtschnitts mehrfach abgetastet werden, vor ihrer Digitalisierung einer Mittelung (18,29) unterzogen werden.

5. Vefahren nach einem der Ansprüche 1 bis 4, **dadurch gekennzeichnet,** daß die digitalisierten Signale zusätzlich zur Erzeugung eines Bildes (12) der ausgewählten Fläche des Bauteils (1) verwendet werden.

6. Verfahren nach einem der Ansprüche 1 bis 5, **dadurch gekennzeichnet,** daß die nach dem vorgegebenen Auswertekriterium bewerteten Signale dazu verwendet werden, das ausgewertete Bauteil (1) zu klassifizieren.

7. Verfahren nach Anspruch 6, **dadurch gekennzeichnet,** daß die Klassifizierung durch Steuern einer Einrichtung (65) zum Einsortieren der ausgewerteten Bauteile (66) in unterschiedliche Ablagespeicher (67-70) erfolgt.

## Claims

1. Method of examining structural components made of transparent material for surface defects and inclusions, a moved light beam (4) being used for spot-type scanning of the component (1) and the light affected by defects of the structural component being detected and used for generating signals, the moved light beam (4) producing a light section through the structural component (1), said light section being moved completely through said component, signals being generated during this movement which are assigned to the front face and to the rear face of the structural component (1), and these signals assigned to the faces being digitised, characterised in that the signals assigned to the faces are fed in parallel both to a matrix memory (24, 30) and, via a preselectable number (x) of thresholds (20, 31), to a number (y) of sector counters (21, 32), that the sector counters (21, 32) are evaluated on-line according to a preselectable criterion with respect to number, position and grey-level distribution of the defect signals, that, in case this criterion is not sufficiently satisfied, a subsequent evaluation of the signals of the matrix memory (24, 30) is automatically effected via a computer (22), that, in addition, receivers (36 to 38) are provided for the detection of anisotropically scattering defects of the structural component (1), the signals generated by said receivers (36 to 38) being fed, each via one of the preamplifiers (39 to 41), to one common main amplifier (47), and one trigger signal being derived from the signal of each of the preamplifiers (39 to 41) as soon as the preamplifier signal exceeds a predetermined threshold value, that all the trigger signals are added (46) and the aggregate signal is used to control the gain factor of the main amplifier (47), and that the signal generated by said main amplifier is digitised and evaluated.

2. Method according to Claim 1, characterised in that
the sector counters (21, 32) generate address signals for assigned areas of the matrix memory (24, 30).

3. Method according to Claim 1, characterised in that
the evaluation criterion evaluates the signals assigned to the front face and to the rear face of the structural component (1).

4. Method according to Claim 1, characterised in that
the signals emitted by area elements of the structural component (1), which are scanned repeatedly during the movement of the light section, are subjected to averaging (18, 29) prior to their digitisation.

5. Method according to any of Claims 1 to 4, characterised in that
the digitised signals are used in addition for generating an image (12) of the selected area of the structural component (1).

6. Method according to any of Claims 1 to 5, characterised in that
the signals evaluated according to the given evaluation criterion are used to classify the evaluated structural component (1).

7. Method according to Claim 6, characterised in that
classification is effected by controlling a unit (65) for sorting the evaluated structural components (66) into different sort stores (67 to 70).

**Revendications**

1. Procédé de contrôle des défauts de surface et des inclusions de composants en matière transparente, selon lequel le composant (1) est détecté point par point par un faisceau lumineux (4) mobile et selon lequel on détecte la lumière influencée par les défauts du composant et on les utilise pour générer les signaux, le faisceau lumineux (4) mobile créant une coupe lumineuse dans le composant (1) en étant complètement déplacé à travers celui-ci, des signaux étant générés pendant ce mouvement, signaux associés à la surface avant et à la surface arrière du composant (1) et les signaux associés à ces surfaces étant numérisés, procédé caractérisé en ce que les signaux associés aux surfaces sont transmis chaque fois en parallèle à la fois à une mémoire image (24, 30) ainsi que par un nombre pré-sélectionné (x) de seuils (20, 31) à un nombre (y) de compteurs de secteurs (21, 32), les compteurs de secteurs (21, 32) étant exploités en ligne selon un critère pré-sélectionné quant au nombre, lieu et répartition des gris des signaux de défauts, et au cas où ces critères ne sont pas satisfaits de manière suffisante, on a automatiquement une exploitation consécutive des signaux de la mémoire image (24, 30) par un calculateur (22), des récepteurs (36-38) étant prévus en outre pour détecter des défauts du composant (1) engendrant une dispersion anisotrope, les signaux générés par ces récepteurs (36-38) étant fournis respectivement par un préamplificateur (39-41) à un amplificateur principal commun (47) et un signal de déclenchement est dérivé du signal de chaque préamplificateur (39-41) dès que le signal de préamplificateur dépasse un seuil prédéterminé, tous les signaux de déclencheur étant additionnés (46) et le signal de somme servant à commander le coefficient d'amplification de l'amplificateur principal (47) et le signal généré par celui-ci est numérisé et exploité.

2. Procédé selon la revendication 1, caractérisé en ce que les compteurs de secteur (21, 32) génèrent des signaux d'adresse pour les zones associées de la mémoire image (24, 30).

3. Procédé selon la revendication 1, caractérisé en ce que le critère d'exploitation exploite les signaux associés à la surface avant et à la surface arrière du composant (1).

4. Procédé selon la revendication 1, caractérisé en ce que les signaux des éléments de surface du composant (1), qui sont détectés plusieurs fois pendant le mouvement de la coupe lumineuse, sont traités pour former une moyenne (18, 29) avant d'être numérisés.

5. Procédé selon l'une des revendications 1 à 4, caractérisé en ce que les signaux numérisés sont en outre utilisés pour générer une image (12) de la surface sélectionnée du composant (1).

6. Procédé selon l'une des revendications 1 à 5, caractérisé en ce que les signaux exploités selon le critère d'exploitation prédéterminé servent à classer le composant (1) contrôlé.

7. Procédé selon la revendication 6, caractérisé en ce que le classement se fait en commandant une installation (65) pour classer les composants contrôlés (66) dans des réceptacles différents (67-70).

EP 0 249 798 B1

Fig.1

Fig. 2